# Europäisches Patentamt

## European Patent Office
## Office européen des brevets

(19)

(11) Veröffentlichungsnummer: **0 184 979**
**A2**

(12)

# EUROPÄISCHE PATENTANMELDUNG

(21) Anmeldenummer: 85730155.0

(22) Anmeldetag: **25.11.85**

(51) Int. Cl.⁴: **B 07 B 1/12,** B 29 C 45/38

(30) Priorität: 04.12.84 DE 3444208

(43) Veröffentlichungstag der Anmeldung: **18.06.86**
**Patentblatt 86/25**

(84) Benannte Vertragsstaaten: **AT BE CH FR GB IT LI LU NL SE**

(71) Anmelder: **Singe, Wolfgang, Sensburger Allee 20, D-1000 Berlin 19 (DE)**

(72) Erfinder: **Singe, Wolfgang, Sensburger Allee 20, D-1000 Berlin 19 (DE)**

(54) **Verfahren und Vorrichtung zum Sortieren von Spritzteilen und deren Angüssen aus Kunststoff.**

(57) Gegenstand der Erfindung ist ein Verfahren und eine Vorrichtung zum Sortieren von Spritzteilen (9) und deren Angüssen (10), die erheblich grössere Abmessungen als die Spritzteile (9) haben. Die Spritzteile (9) und die Angüsse (10) fallen nach dem Öffnen der Spritzwerkzeuge (6) auf einen Stabrost (11). Aufgrund der gewählten Stabdicken des Stabrostes (11) können die Spritzteile (9) passieren und die Angüsse (10) werden durch einen von einem pneumatischen Steuerkreis erzeugten Druckluftimpuls über einen Austragskanal (5) einem Zerkleinerungsgerät (20) zugeführt und als Granulat von vorgegebener Korngrösse zur Eintragsseite der Spritzgussmaschine (6) zurückgefördert.

EP 0 184 979 A2

0184979

- 1 -

KRONE GmbH
D-1ooo Berlin 37
-------------------


Verfahren und Vorrichtung zum Sortieren von
Spritzteilen und deren Angüssen aus Kunststoff


Die Erfindung betrifft ein Verfahren und eine Vorrichtung zum Sortieren von insbesondere kleinen Kunststoff-Spritzteilen und deren Angüssen, die in Mehrfachwerkzeugen einer Spritzgußmaschine hergestellt
werden.

Beim Spritzgießen von Kunststoffteilen wird der
in einem beheizten Zylinder erweichte oder geschmolzene Kunststoff, meist ein Thermoplast, unter Druck durch
eine Düse in eine Werkzeugform gepreßt, in welcher er
in kurzer Zeit erstarrt. Nach Freigabe der beiden Werkzeughälften fällt das fertige Spritzteil zusammen mit
dem beim Spritzvorgang gebildeten und vom Spritzteil
-abgetrennten Anguß aus der Werkzeugform.

Die Sortierung der Spritzteile und ihrer Angüsse
kann von Hand auf einem Förderband oder auch in den

125-(x2306)-Sd-E

Auffangbehältern erfolgen, was jedoch insbesondere bei
sehr kleinen Spritzgußteilen außerordentlich zeit- und
arbeitsaufwendig ist.

Ferner wird auch bereits auf Rüttelblechen sortiert,
wobei die Angüsse und Spritzteile in getrennten Behältern
gesammelt werden. Dabei ist es jedoch praktisch nicht
möglich, die abgeschiedenen Angüsse automatisch einem
Zerkleinerungsgerät, z. B. einer Mühle, zuzuführen, in
welcher sie auf vorgegebene Korngrößen zerkleinert werden, um in der Spritzgußmaschine erneut verarbeitet werden zu können. Die Beschickung der Zerkleinerungsgeräte
erfolgt von Hand in Abständen von 10 bis 30 min. Um Verstopfungen durch die zu geringe Speicherkapazität der
Mühlen zu vermeiden, muß das Mahlgut in gesonderten Behältern gesammelt und vor Wiedereinspeisung in die Spritzgußmaschine ca. 4 h bei 80 bis 120 °C getrocknet werden.
Ferner verstopfen die Rüttelbleche relativ häufig und
das Sortiergut hat die Neigung zum Aufwärtswandern, unabhängig von der Rüttelfrequenz, so daß in diesen Fällen
manuell nachsortiert werden muß. Daher ist es mit diesen
Sortierverfahren nicht möglich, die aussortierten Angüsse
kontinuierlich in den Verarbeitungsprozeß zurückzuführen.

Der Erfindung liegt die Aufgabe zugrunde, die durch
Spritzgießen hergestellten Kleinteile von den größeren
unregelmäßig geformten Angüssen automatisch zu sortieren und die Angüsse direkt in eine Mühle zu fördern, ohne
daß sich die Taktzeit der Spritzgußmaschine durch diesen
Sortiervorgang verlängert. Daneben sollen die Spritzangüsse als Granulat unmittelbar der Spritzgußmaschine zugeführt werden können, so daß ein Kreislauf entsteht.

Diese Aufgabe wird durch die kennzeichnenden Merkmale der Patentansprüche 1 bzw. 2 gelöst. Vorteilhafte weitere Ausgestaltungen der Erfindung sind Gegenstand der Unteransprüche.

Durch die Erfindung eröffnet sich die Möglichkeit einer zuverlässigen Aussortierung der kompliziert geformten größeren Angüsse von den Kleinteilen und einer taktweisen Rückführung dieser Angüsse in ein Zerkleinerungsgerät ohne manuelle Eingriffe. Durch geeignete Wahl der Stabdurchmesser und damit der Durchgangsräume des Stabrostes können unterschiedlich geformte Kleinteile mit gleichbleibendem Sortiererfolg von den unregelmäßigen Angüssen getrennt werden.

Im folgenden wird ein bevorzugtes Ausführungsbeispiel der Erfindung anhand der Zeichnung im einzelnen beschrieben. Es zeigen:

Fig. 1      eine in eine Spritzgußmaschine eingeschobene Sortiervorrichtung in Seitenansicht;

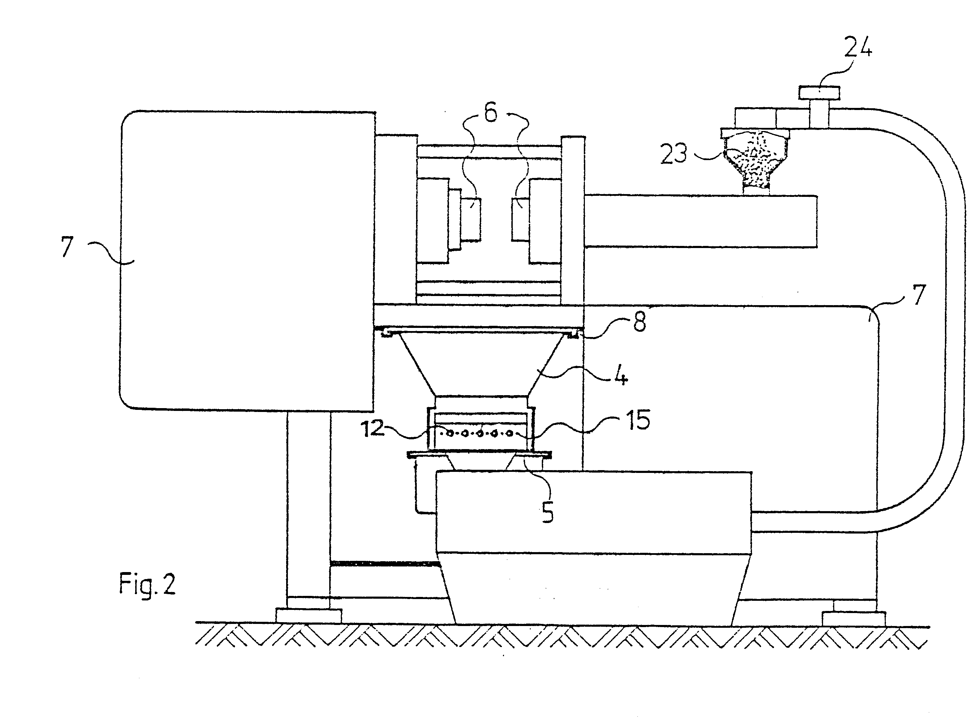

Fig. 2      eine Vorderansicht der Spritzgußmaschine mit Sortiervorrichtung und Zerkleinerungs-Mühle;

Fig. 3      eine Vorderansicht der Sortiervorrichtung mit Stabrost ohne Schubkasten;

Fig. 4      die Sortiervorrichtung in Draufsicht in Richtung X in Fig. 3;

Fig. 5      einen Schnitt A-A in Fig. 3;

Fig. 6      einen Schnitt B-B in Fig. 3;

Fig. 7      den Schaltplan der Druckluft-Steuerung.

Bei der dargestellten Sortiervorrichtung 1 ist
ein Sortierraum  2 von einem Gehäuse 3 umgeben, an
dem oben ein Eintragstrichter 4 und seitlich ein horizontaler Austragskanal 5 angeordnet sind. Die Sortiervorrichtung 1 wird von der Seite her direkt unter das
Spritzwerkzeug 6 der Spritzgußmaschine 7 auf Führungsschienen 8 eingeschoben, die an der Spritzgußmaschine
7 und am Eintragstrichter 4 ausgebildet sind.

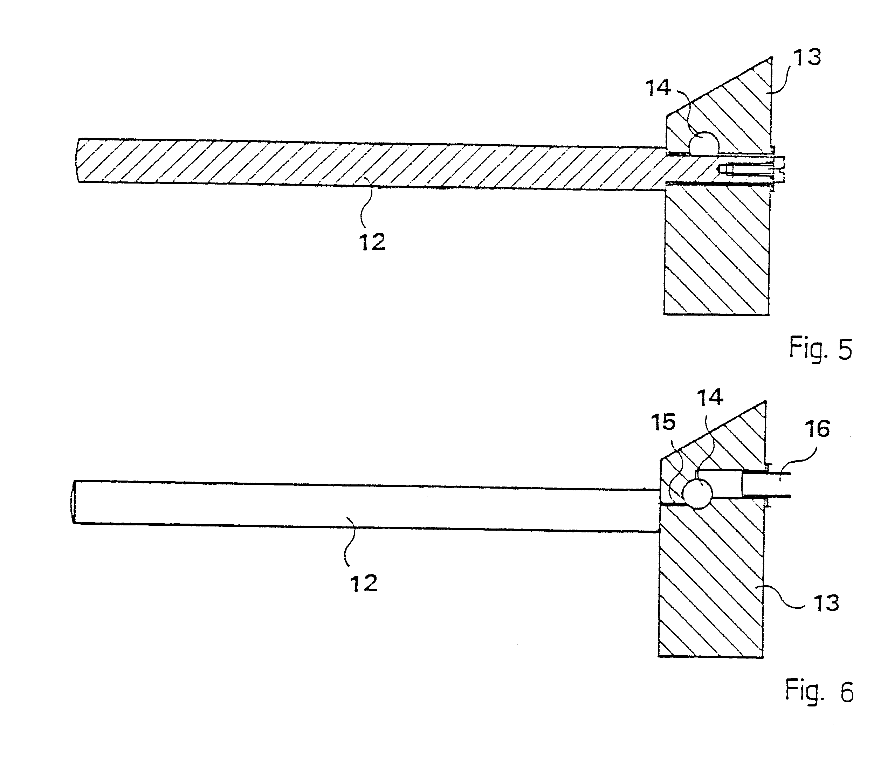

Im Gehäuse 3 ist zur Sortierung der Spritzteile
9 und der Angüsse 10 ein Stabrost 11 vorgesehen, dessen
einreihig angeordnete Roststäbe 12 in einem Aufnahmeteil 13 einseitig und mittels einer Schraubverbindung
lösbar fixiert sind (Fig. 5). Es können Stäbe 12
mit unterschiedlichen Durchmessern eingesetzt werden,
um so die Durchgangsöffnungen auf die Größe verschiedener Spritzgußteile 9 und  Angüsse 10 einstellen zu
können.

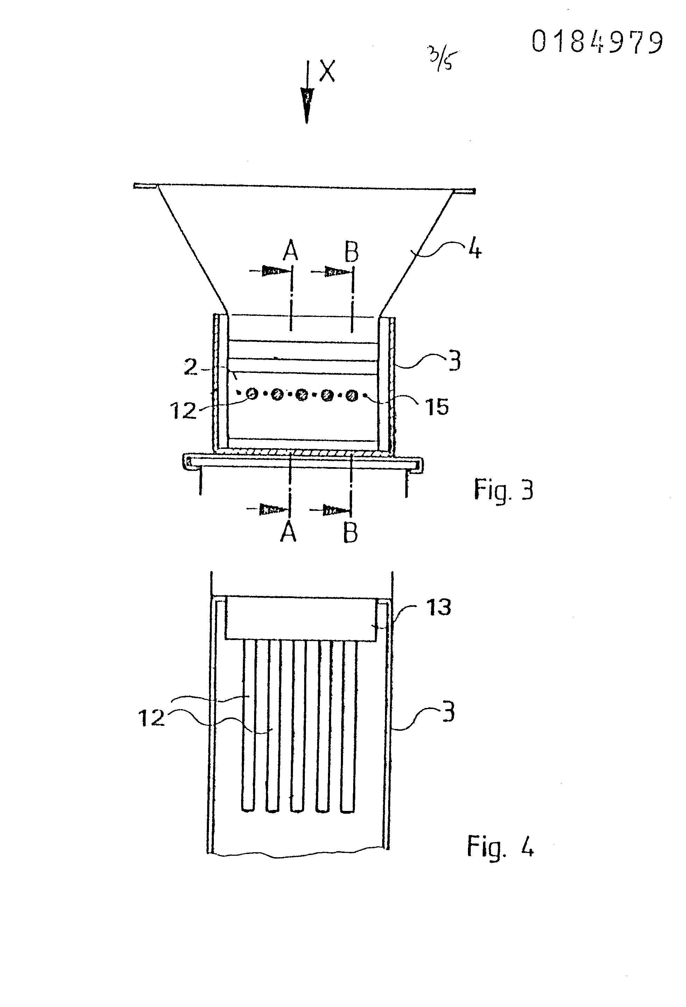

Der Aufnahmeteil 13 ist an der dem Austragskanal
5 gegenüberliegenden Wand des Gehäuses 3 angeordnet und
enthält einen sich etwa über die gesamte Gehäusebreite
erstreckenden Verteilerkanal 14, von dem Blasdüsen 15
zwischen den Roststäben 12 in den Sortierraum 2 senkrecht zu dem Verteilerkanal 14 ausmünden. Der Verteilerkanal 14 ist über einen Anschlußstutzen 16 mit einem Druckluftkreis 24 verbunden (Fig. 4 bis 7).

Die Roststäbe 12 erstrecken sich bis zu einer Verschlußklappe 17, die um eine obere horizontale Achse 18 mittels eines Antriebs 30 schwenkbar am Gehäuse 3 angelenkt ist und den Sortierraum 2 von dem zum Aufgabetrichter 19 eines Zerkleinerungsgeräts 20 führenden Austragskanal 5 trennt.

Zur Aufnahme der durch den Stabrost 11 gefallenen Spritzteile 9 ist ein Schubkasten 21 unter dem Gehäuse 3 vorgesehen.

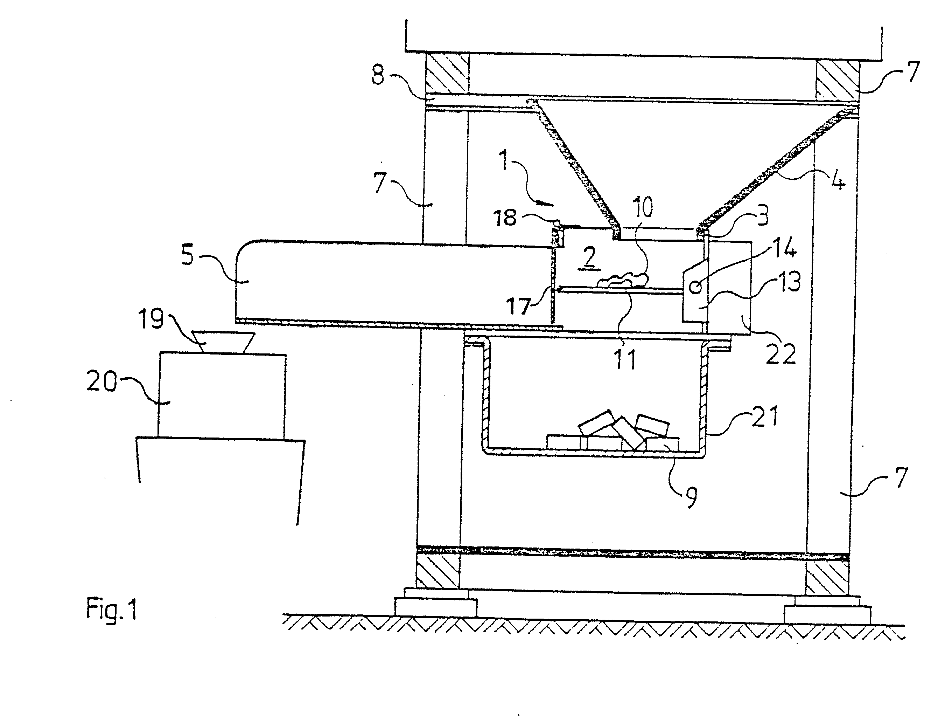

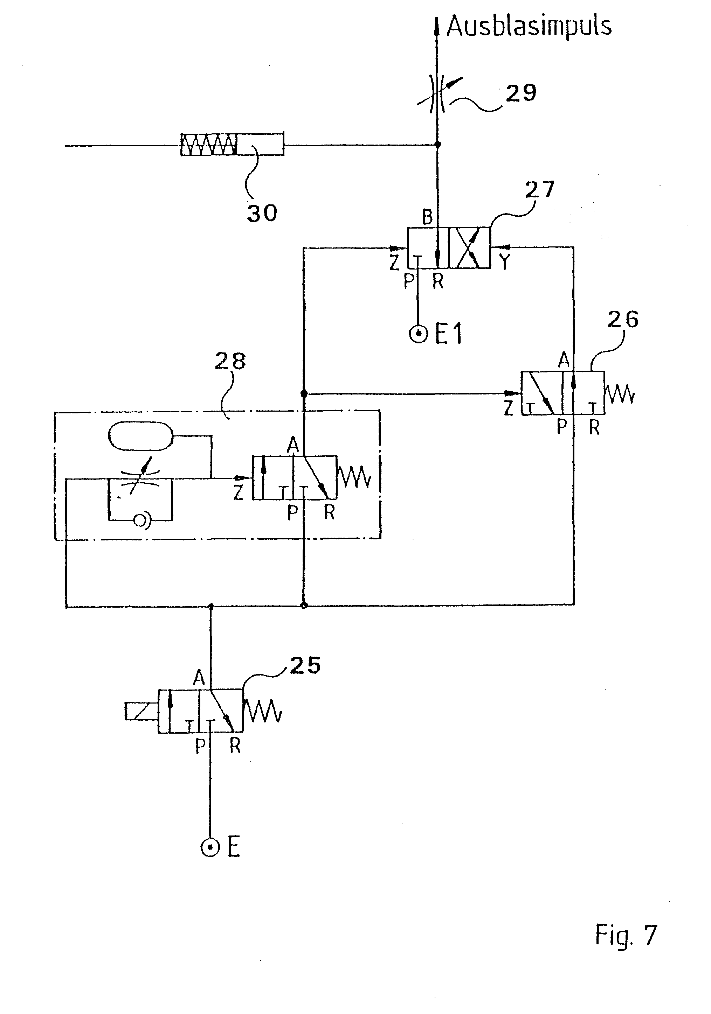

Die Druckluftzufuhr zu den Blasdüsen 15 wird durch den in Fig. 7 dargestellten Druckluft-Kreis gesteuert, dessen Bauteile und Leitungen in einem Kasten 22 am Gehäuse 3 neben dem Aufnahmeteil 13 angeordnet sind (Fig. 1).

Bei Betätigung eines Magnetventils 25 nach rechts strömt die am Eingang E anliegende Steuerluft über ein 3/2-Wegeventil 26 zu dem Steuereinlaß Y eines 3/2-Wegeventils 27, das dadurch aus seiner dargestellten Sperrstellung nach links in seine Durchgangsposition verschoben wird. Damit ist die Verbindung von einem Eingang $E_1$ für die Arbeits-Druckluft über ein die Stärke der Luftströmung bestimmendes Ventil 29 zu dem Verteilerkanal 14 und den Blasdüsen 15 hergestellt. Die durch diesen Steuervorgang in den Sortierraum 2 eingeführte Arbeits-Druckluft fördert die auf dem Stabrost 11 liegenden Angüsse im Austragskanal 5 in den Eintragstrichter 19
des Zerkleinerungsgeräts 20. Zu diesem Zweck wird
die Verschlußklappe 17 durch den pneumatischen Antrieb 30 geöffnet.

Die Blasdauer wird in einem Zeitventil 28 eingestellt, das mit der Betätigung des Magnetventils 25
über seinen Steueranschluß Z aktiviert wird. Nach Ablauf der eingestellten Zeit wird in diesem Zeitventil
28 der Durchgang von P nach A freigegeben und die
Steueranschlüsse Z der beiden 3/2-Wegeventile 26, 27
werden mit Steuerdruck beaufschlagt. Das 3/2-Wegeventil 26 wird dadurch von A nach R entlüftet und das
3/2-Wegeventil 27 sperrt die Arbeitsluft-Zufuhr an
P und entlüftet damit den Verteilerkanal 14.

Der Einschaltzustand des Magnetventils 25 wird
von der Taktzeit der Spritzmaschine bestimmt, die
vom Einspritz-Start bis zum Nachdruck-Ende 2 bis 10 sec
beträgt. Die Blasdauer ist jedoch wesentlich kürzer und
kann zwischen 0,5 und 1,0 sec liegen. Der Druckluft-
Steuerkreis wird über zwei - nicht dargestellte - unterschiedlich ausgebildete Kupplungen für die Steuerluft
und die Arbeitsluft an entsprechende Druckleitungen angeschlossen.

Mit der vorstehend beschriebenen Vorrichtung vollzieht sich die Sortierung wie folgt: Nach Beendigung
eines Spritzvorganges gibt das Spritzwerkzeug 6 der
Spritzgußmaschine 7 die Spritzteile 9 und die Angüsse
10 frei, die gemeinsam durch den Eintragstrichter 4 in
den Spritzraum 2 fallen. Die Spritzteile 9 fallen durch den Stabrost 11 in den Schubkasten 21 und die Angüsse
10 werden vom Stabrost 11 zurückgehalten. Die Verschlußklappe 17 verhindert, daß Spritzteile 9 in den Austragskanal 5 fallen und so der Sortierung entgehen. In diesem Betriebszustand öffnet das Magnetventil 25 des Druckluft-Steuerkreises, so daß das Zeitgeberventil 28 vom
Steuerdruck aktiviert und das Umschaltventil 27 für
den Arbeitsdruck in seine Durchgangs-Stellung umgestellt
wird. Arbeits-Druckluft strömt über das Einstellventil
29 zum Verteilerkanal 14 und aus diesem über die Blasdüsen 15 in den Sortierraum 2. Durch die Anordnung der
Blasdüsen 15 parallel zu und zwischen den Roststäben
12 sind die austretenden Luftströme längs der Roststäbe
zum Austragskanal 5 hin gerichtet. Die lose auf den Roststäben 11 aufliegenden Angüsse 10 werden daher auf den
Stäben in den Austragskanal 5 geschoben, wobei die Verschlußklappe 17 durch den taktweise angesteuerten pneumatischen Stellantrieb 30 geöffnet ist. Die Lage der Blasdüsen 15 zwischen den Roststäben 12 ist für den Abfördervorgang insofern von besonderer Bedeutung, weil dadurch
die Angüsse nicht zwischen die Roststäbe 12 gedrückt werden, sondern                                    längs
der Roststäbe 12 in den Austragskanal 5 gleiten. Im Zerkleinerungsgerät 20 werden die eingetragenen Angüsse bis
auf eine vorgegebene Korngröße zerkleinert und über ein
Dosierventil 24 in einen Eintragszylinder 23 der Spritzgußmaschine 7 zurückgeführt.

Bevorzugt werden mit der beschriebenen Vorrichtung
Kleinteile von z. B. fernmeldetechnischen Geräten sortiert, deren Abmessungen erheblich unter denen der Angüsse liegen. Hierzu gehören beispielsweise Abdeckplättchen für die Schraubenbohrungen im Boden von
Telefonapparaten, Unterlegscheiben und ähnlich geformte Kleinteile.

A n s p r ü c h e
-------------------

1. Verfahren zum Sortieren von Spritzteilen und deren
   Angüssen aus Kunststoff, die insbesondere in Mehrfachwerkzeugen einer Spritzgußmaschine hergestellt
   sind,

   d a d u r c h    g e k e n n z e i c h n e t ,

   daß die Spritzteile    und die Angüsse ·_ . nach
   dem Öffnen der Werkzeuge gemeinsam auf einen Stabrost fallen, der die Angüsse zurückhält und die
   Spritzteile passieren läßt, und

   daß die zurückgehaltenen Angüsse in Abstimmung mit
   der Taktzeit der Spritzgußmaschine periodisch durch
   Druckluft-Impulse vom Stabrost einer Mühle zugeführt
   und aus dieser zu Granulat verkleinert in die Spritzgußmaschine zurückgefördert werden.

2. Sortiervorrichtung zum Sortieren von Kunststoff-
   Spritzteilen und deren Angüssen, die insbesondere
   in Mehrfachwerkzeugen einer Spritzgußmaschine hergestellt sind,

   d a d u r c h    g e k e n n z e i c h n e t ,

0184979

- 2 -

daß in einem Gehäuse (3) mit einem Eintragstrichter (4)
und einem zu einer Mühle (20) führenden Austragskanal
(5) ein Stabrost (11) auswechselbar angeordnet ist,
dessen Stäbe (12) sich bis zu einer den Austragskanal
(5) vom Sortierraum (2) trennenden Klappe (17) erstrecken, und

daß in den Sortierraum (2) parallel zu den Roststäben
(12) ausgerichtete Blasdüsen (15) ausmünden, die an
einen entsprechend der Taktzeit der Spritzgußmaschine
gesteuerten Druckluftkreis (24) angeschlossen sind.

3. Vorrichtung nach Anspruch 2,
dadurch gekennzeichnet,
daß der Eintragstrichter (4) mittels Führungsschienen
(8) direkt unter den Werkzeugen der Spritzgußmaschine
positionierbar ist.

4. Vorrichtung nach Anspruch 2 oder 3,
dadurch gekennzeichnet,
daß die auswechselbar in einer Reihe angeordneten Roststäbe (12) mit einem Ende in einem Aufnahmeteil (13)
lösbar fixiert sind.

5. Vorrichtung nach einem der Ansprüche 2 bis 4,
dadurch gekennzeichnet,
daß die Blasdüsen (15) zwischen den Roststäben (12) in
deren Längsrichtung ausgerichtet in der Aufnahme (13)
angeordnet sind.

6. Vorrichtung nach einem der Ansprüche 2 bis 5,
dadurch gekennzeichnet,

daß der am Gehäuse (3) direkt angeordnete Druckluftkreis (24) ein pneumatisch angesteuertes Umschaltventil (27) für die Arbeits-Druckluft, ein in Abstimmung mit dem Arbeitstakt der Spritzgußmaschine betätigtes Magnetventil (25) für einen Steuerdruck und ein im Steuerdruckkreis zwischen dem Magnetventil (25) und dem Umschaltventil (27) angeordnetes Zeitgeberventil (28) enthält.

7. Vorrichtung nach Anspruch 6,
dadurch gekennzeichnet,
daß der Druckluftkreis (24) ein Ventil (29) zur Einstellung der Stärke der Arbeits-Druckluft sowie ein Stellglied (30) als Antrieb für die Klappe (17) aufweist.

8. Vorrichtung nach Anspruch 6,
dadurch gekennzeichnet,
daß im Steuerdruckkreis zwischen dem Magnetventil (25) und dem Umschaltventil (27) ein weiteres Ventil (26) angeordnet ist, das die Öffnungsbewegung des Umschaltventils (27) einleitet.

Fig.1

Fig. 2

X

A    B

4

2

3

12    15

A    B

Fig. 3

13

12    3

Fig. 4

Fig. 5

Fig. 6

0184979

Ausblasimpuls

29

30

27

B

Z | P R Y

⊙ E1

28

26

A

Z | P R

A

Z | P R

25

A

P R

⊙ E

Fig. 7